# FASCICULE DE BREVET EUROPEEN

(11) **EP 2 171 888 B1**
(45) Date de publication et mention de la délivrance du brevet: **03.08.2016**
(21) Numéro de dépôt: 08806016.5
(22) Date de dépôt: 18.06.2008
(51) Int. Cl.: H04B 10/2513, H04B 10/66

(54) **RESEAU OPTIQUE PASSIF BIDIRECTIONNEL A HAUT DEBIT, CENTRAL OPTIQUE ET DISPOSITIF DE TERMINAISON DE LIGNE ASSOCIES**
BIDIREKTIONALES PASSIVES OPTISCHES NETZWERK MIT HOHEM DURCHSATZ SOWIE OPTISCHE NABEN- UND LEITUNGSANSCHLUSSVORRICHTUNG DAFÜR
HIGH-THROUGHPUT BIDIRECTIONAL PASSIVE OPTICAL NETWORK, ASSOCIATED OPTICAL HUB AND LINE TERMINATION DEVICE

(30) Priorité: 19.06.2007 FR 0755853
(43) Date de publication de la demande: 07.04.2010
(73) Titulaire: Orange, 75015 Paris (FR)
(72) Inventeur: PINCEMIN, Erwan, F-22290 Gommenec'h (FR); GENAY, Naveena, F-22300 Lannion (FR)
(74) Mandataire: Millet, Sandrine
(86) Numéro de dépôt international: PCT/FR2008/051081
(87) Numéro de publication internationale: WO 2009/004244

(56) Documents cités:
- EP-A- 1 271 808
- EP-A- 1 696 588
- GENAY N ET AL: "Bidirectional WDM/TDM-PON access Networks integrating downstream 10 Gbits/s DPSK and upstream 2,5 Gbits/s OOK on the same wavelength" PROCEEDINGS OF THE EUROPEAN CONFERENCE ON OPTICAL COMMUNICATION, XX, XX, 2006, page 2pp, XP009095047 cité dans la demande
- BISSESSUR H ET AL: "1.6 Tbit/s (4040 Gbit/s) DPSK transmission over 3100 km of TeraLight fibre with direct detection" ELECTRONICS LETTERS, IEE STEVENAGE, GB, vol. 39, no. 2, 23 janvier 2003 (2003-01-23), pages 192-193, XP006019698 ISSN: 0013-5194
- ROYSET A., HJELME D.: "Novel dispersion tolerant optical duobinary transmitter using phase modulator and Bragg grating filter" ECOC, septembre 1998 (1998-09), pages 225-226, XP002466691 ECOC'98
- GNAUCK A. H., LUI X., CHANDRASEKHAR S., WEI X.: "Optical duobinary format from demodulation of DPSK using athermal delay interferometer" IEEE PHOTONICS TECHNOLOGY LETTERS, vol. 18, no. 4, 15 février 2006 (2006-02-15), XP002466692 IEEE
- SUGIE T ET AL: "Wavelength channel data rewrite using saturated SOA modulator for WDM networks with centralized light sources" JOURNAL OF LIGHTWAVE TECHNOLOGY, XX, XX, vol. 21, no. 11, novembre 2003 (2003-11), pages 2546-2556, XP011103873 ISSN: 0733-8724
- HUNG W ET AL: "An optical network unit for WDM access networks with downstream DPSK and upstream re-modulated OOK data using injection-locked FP laser", OPTICAL FIBER COMMUNICATION CONFERENCE. (OFC). POSTCONFERENCE DIGEST. ATLANTA, GA, MARCH 23 - 28, 2003; [TRENDS IN OPTICS AND PHOTONICS SERIES. (TOPS)], WASHINGTON, DC : OSA, US, vol. TOPS. VOL. 86, 23 March 2003 (2003-03-23), pages 281-282, XP010680280, DOI: 10.1109/OFC.2003.1247657 ISBN: 978-1-55752-746-2

## Description

### 1. Domaine de l'invention

L'invention concerne le domaine des réseaux d'accès optique et plus particulièrement, le domaine des réseaux d'accès optiques passifs ou PON (Passive Optical Networks).

Les réseaux d'accès sont des réseaux coûteux pour les opérateurs en télécommunication car ce sont le plus souvent des réseaux arborescents desservant de nombreux abonnés. De tels réseaux sont équipés de nombreux composants parfois consommateurs en énergie électrique. Afin de limiter ces coûts d'exploitation tout en améliorant la qualité des services offerts aux abonnés, les opérateurs ont développé les réseaux d'accès optiques passifs. Tous les composants situés dans le réseau entre le central optique et les équipements des usagers sont passifs, c'est-à-dire qu'ils n'ont pas besoin d'être alimentés électriquement pour fonctionner.

De tels réseaux optiques offrent aux abonnés un débit de connexion élevé de l'ordre de 2,5 Gbit/s (Gigabit par seconde). Ces débits permettent de proposer des services tels que la télévision haute définition, l'Internet ou encore la visiophonie, répondant ainsi à une demande des abonnés.

Ils sont actuellement mis en oeuvre pour le déploiement d'accès haut débit chez l'abonné résidentiel de type FTTH (Fiber To The Home).

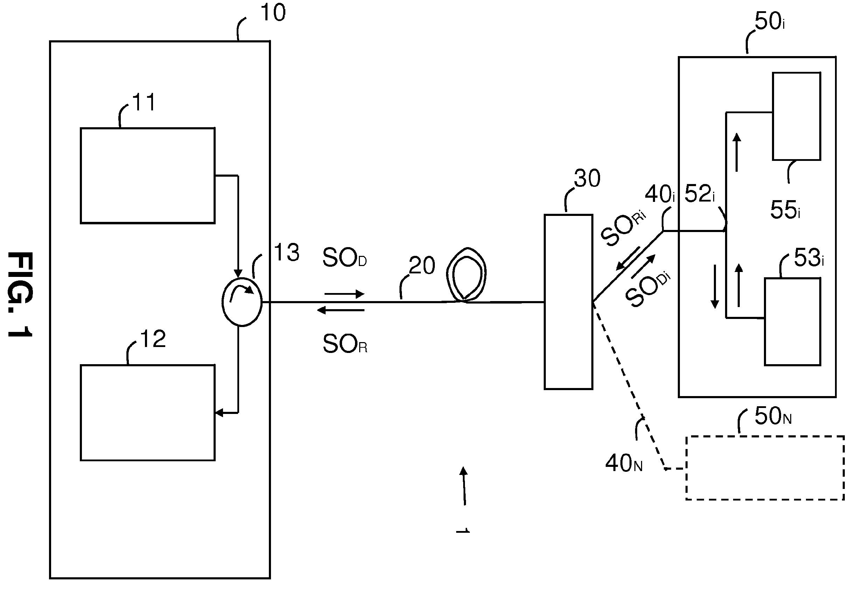

Un réseau optique passif de type PON bidirectionnel est connu du document intitulé "Bidirectional WDM/TDM-PON access Networks integrating downstream 10 Gbits/s DPSK and upstream 2,5 Gbits/s OOK on the same wavelength", par Genay et al, publié comme papier Th3.6.6 lors de la conférence European Conférence on Optical Communications (ECOC) 2006, qui s'est tenue à Cannes, France. Un tel réseau d'accès optique 1, comprend, en référence à la Figure 1, un central optique 10 relié par une fibre optique 20 bidirectionnelle à un élément de distribution 30 1 vers N, N entier supérieur ou égal à 1, apte à distribuer un signal optique descendant à N dispositifs de terminaison de ligne 50₁ à 50_{N} et à multiplexer N signaux optiques remontants émis par les N dispositifs de terminaisons de lignes 50₁ à 50_{N} à destination du central optique 10. L'élément de distribution est relié aux dispositifs de terminaison de lignes 50₁ à 50_{N} par N fibres optiques 40₁ à 40_{N}. A chaque dispositif de terminaison de ligne, on peut connecter un ou plusieurs abonnés.

Le central optique 10 comprend des moyens d'émission 11 d'un signal optique, généralement un laser servant à véhiculer des informations à destinations d'un ou plusieurs abonnés, des moyens de réception 12 d'un signal optique remontant en provenance des abonnés et un circulateur 13, apte à faire circuler les signaux optiques descendant et remontant dans l'unique fibre optique 20.

Le dispositif de terminaison de ligne 50ᵢ comprend un circulateur 51ᵢ apte à faire circuler les signaux optiques descendant SO_{D,ri} et remontant SO_{R} dans la fibre optique bidirectionnelle 40ᵢ. Il comprend en outre des moyens de couplage 52ᵢ aptes à répartir la puissance optique du signal optique descendant reçu SO_{D,ri} entre un premier SO_{D,ri1} et un deuxième SO_{D,ri2} signaux optiques descendants reçus. Le premier signal optique descendant reçu SO_{D,ri1} est traité par des moyens de réception 53ᵢ pour décodage. Le deuxième signal optique descendant reçu SO_{D,ri2} est traité par des moyens de génération 54ᵢ d'un signal optique remontant SO_{Ri} à partir du signal optique descendant reçu SO_{D,ri}.

Le réseau optique passif décrit précédemment utilise le principe du multiplexage temporel ou TDM (Time Division Multiplexing). Dans un tel réseau, le signal optique émis par le laser 10 est découpé en une pluralité d'intervalles temporels de même durée. Chaque intervalle temporel est ensuite associé à l'un des dispositifs de terminaison de ligne 50ᵢ en fonction de leurs besoins.

Il existe également des réseaux optiques passifs utilisant le multiplexage en longueurs d'onde ou WDM (Wavelength-Division Multiplexing). Dans un tel réseau, le central optique comprend une pluralité de lasers émettant chacun une composante optique de données associée à une longueur d'onde qui lui est propre. Un multiplexeur optique placé en sortie du central optique et auquel est connectée une première extrémité de la fibre principale du réseau permet d'injecter dans cette dernière un signal multiplexé en longueurs d'onde. Dans un tel réseau optique, chaque dispositif de terminaison de ligne est associé à une composante optique issue du central optique et donc à une longueur d'onde particulière. Un exemple d'un tel réseau est décrit dans l'article « An Optical Network Unit for WDM Access Networks with Downstream DPSK and Upstream Re-modulated OOK Data Using Injection-Locked FP Laser » de W. Hung et al., Optical Fiber Communication Concerference (OFC), Postconference Digest, 23-28 mai 2003.

Les réseaux d'accès optiques passifs, qu'ils utilisent le multiplexage temporel ou le multiplexage en longueurs d'onde, présentent une portée classique de l'ordre de 20 km (kilomètres). Cette portée limitée du réseau tient au fait que dans les réseaux optiques passifs, les différents composants optiques que sont, par exemple, les coupleurs optiques, les multiplexeurs optiques ou les fibres optiques, occasionnent des pertes de puissance optique des signaux transitant dans le réseau et que les signaux émis ne peuvent pas être amplifiés sans contraintes pour compenser de telles pertes. En effet, dans un réseau optique passif, les signaux optiques descendants, c'est-à dire les signaux optiques émis par le central à destination des abonnés, et les signaux optiques remontants, c'est-à-dire les signaux optiques émis par les équipements abonnés à destination du central optique, sont véhiculés par une unique fibre optique. Ceci permet de réduire le coût du réseau. Toutefois, l'utilisation d'une unique fibre optique pour véhiculer les signaux optiques descendants et remontants introduit des contraintes sur les puissances d'émission de ces signaux optiques.

Notamment, il faut, d'une part, que la puissance d'émission des signaux de données soit suffisante pour compenser les pertes liées à la traversée du réseau et ainsi permettre une réception correcte. Il faut d'autre part que la puissance ne soit pas élevée au point de générer des signaux rétrodiffusés qui risquent d'éblouir les moyens de réception servant à détecter les signaux se propageant dans le sens abonnés-central. Le résultat de ce compromis sur la valeur de la puissance optique d'émission des signaux dans un réseau optique passif se traduit par une portée limitée du réseau.

Une tendance actuelle est à l'augmentation du débit de transmission dans les réseaux d'accès optiques passifs, au-delà de 10 Gbits/s, pour atteindre 40 Gbits/s. Une telle augmentation de débit entraîne une augmentation des distorsions subies par les signaux transmis à travers le réseau d'accès optique. Parmi ces distorsions, qui s'accentuent avec le débit, on compte le phénomène de dispersion chromatique (DC). A portée constante (donc à DC cumulée constante), l'impact de la dispersion chromatique est multipliée par 16 pour un débit multiplié par 4.

Les solutions de l'état de l'art consistent à introduire des modules de compensation de la dispersion chromatique en ligne. Un premier inconvénient de tels dispositifs est qu'ils sont coûteux. Un deuxième inconvénient est qu'ils ne sont donc pas adaptés à un réseau d'accès de type PON, car les dispositifs de terminaison de ligne ne sont pas nécessairement tous situés à la même distance du central optique (il faudrait une compensation spécifique à chaque client pour que tout soit parfait).

Ainsi, il existe un besoin de compenser la dispersion chromatique introduite lors de la transmission de signaux optiques sur un réseau optique passif à haut débit, typiquement 10 Gbits/s et au-delà, tout en maintenant le caractère passif d'un tel réseau.

### 4. Exposé de l'invention

L'invention répond à ce besoin en proposant un réseau optique passif comprenant un central optique relié par au moins une fibre optique bidirectionnelle à au moins un dispositif de terminaison de ligne dudit réseau,
ledit central optique comprenant des premiers moyens d'émission d'un signal optique de données descendant modulé en phase au format NRZ-DPSK et des premiers moyens de réception d'un signal optique remontant,
ledit dispositif de terminaison de ligne comprenant des moyens de couplage aptes à diviser la puissance optique du signal optique descendant transmis de façon à obtenir un premier et un deuxième signal optique descendant, des deuxièmes moyens de réception optique et des moyens de génération et d'émission d'un signal optique remontant à partir du deuxième signal optique descendant,
ledit dispositif de terminaison de ligne comprenant en outre des premiers moyens de conversion dudit premier signal optique descendant, modulé en phase au format NRZ-DPSK, en un signal optique de données modulé en amplitude au format de modulation duobinaire, lesdits deuxièmes moyens de réception étant aptes à recevoir ledit signal optique de données modulé en amplitude au format de modulation duobinaire descendant modulé en amplitude;
lesdits moyens de génération et d'émission du signal optique remontant étant aptes à générer et émettre un signal optique remontant modulé en phase au format NRZ-DPSK à partir dudit deuxième signal optique descendant ;
ledit central optique comprenant, préalablement auxdits premiers moyens de réception, des deuxièmes moyens de conversion dudit signal optique remontant, modulé en phase au format NRZ-DPSK, en un signal optique de données modulé en amplitude au format de modulation duobinaire, lesdits premiers moyens de réception étant aptes à recevoir ledit signal optique remontant modulé en amplitude ;
les premiers moyens d'émission et les premiers moyens de réception du central optique étant couplés à une même fibre bidirectionnelle ; et
les moyens de génération et d'émission et les deuxièmes moyens de réception du dispositif de terminaison de ligne étant couplés à une même fibre bidirectionnelle.

Selon l'invention, les signaux optiques descendant et remontant transmis dans la fibre de ligne sont au format NRZ-DPSK. Ce format de modulation de phase a pour premier avantage de limiter le niveau de puissance de rétrodiffusion introduit par l'effet non linéaire de Brillouin. Un tel effet n'apparaît que lorsque la puissance d'émission des signaux optiques transmis dans la fibre de ligne dépasse un certain seuil. A titre d'exemple, il a été constaté que le réseau optique passif selon l'invention permet de repousser un tel seuil de plusieurs dB par rapport à l'art antérieur.

Un deuxième avantage du réseau optique passif selon l'invention est d'être adapté à une remodulation chez le client, du fait de son amplitude constante.

La compensation de la dispersion chromatique introduite lors de la transmission dans la fibre optique est réalisée, selon l'invention, à la réception du signal optique descendant transmis au niveau du dispositif de terminaison de ligne. Plus précisément, le signal optique descendant reçu est converti en un signal modulé en amplitude au format duobinaire, Ce format est en effet particulièrement résistant à l'accumulation de la dispersion chromatique pour deux raisons principales :
- il présente un spectre étroit;
- il combine modulation en amplitude et modulation en phase.
Or, il est connu que la dispersion chromatique agit de façon différenciée sur les longueurs d'onde constitutives d'un spectre, en déphasant d'autant plus les longueurs d'onde qu'elles sont éloignées les unes des autres. Par exemple, pour une fibre standard de 100 km de longueur, la dispersion chromatique est de 1700 ps/nm, lorsque les raies extrêmes du spectre sont distantes de 1 nm et de 3400 ps/nm, lorsqu'elles sont distantes de 2 nm. Réduire l'encombrement spectral du signal transmis au module abonné augmente donc considérablement la résistance à la dispersion chromatique.

On notera que l'utilisation du format duobinaire est connue dans le domaine des réseaux de transport longue distance, mais que, dans de tels réseaux, la conversion se fait au niveau du central émetteur, pas dans le dispositif de terminaison de ligne.

Il s'ensuit que le réseau optique passif selon l'invention génère, à 40 Gbits/s, un niveau de dispersion chromatique équivalent à celui généré par un réseau optique passif selon l'art antérieur à 10 Gbits/s. Par conséquent, un tel réseau optique passif permet de compenser la dispersion chromatique induite par une augmentation de débit.

De plus, le signal optique descendant converti peut être traité par les mêmes moyens de réception du dispositif de terminaison de ligne que ceux selon l'art antérieur.

Le réseau optique passif selon l'invention étant bidirectionnel, le dispositif de terminaison de ligne est apte à envoyer un signal optique remontant à destination du central optique. De façon connue, un tel signal optique est généralement généré par remodulation du signal optique descendant reçu, ce qui permet d'éviter d'avoir recours à un laser chez le client. Une telle génération se fait généralement en remodulant un signal optique descendant modulé en phase en un signal optique remontant modulé en amplitude.

Selon l'invention, le signal optique remontant obtenu à partir du signal optique descendant reçu est modulé en phase au format NRZ-DPSK, de façon à pouvoir lui appliquer, au central optique, une conversion du même type que celle appliquée au signal optique descendant au niveau du dispositif de terminaison de ligne. Les moyens de réception du signal optique remontant au niveau du central optique du réseau optique passif selon l'invention sont donc adaptés à recevoir des signaux optiques modulés en phase au format NRZ-DPSK.

Selon un autre aspect de l'invention, le signal optique descendant ayant un débit de base donné, lesdits premiers et deuxièmes moyens de conversion comprennent un filtrage gaussien dont la largeur à mi hauteur appartient à une plage de valeurs correspondant à un pourcentage compris entre 50 % et 65 % dudit débit de base.

Il s'agit d'un filtrage Gaussien étroit, qui permet, lorsqu'il est appliqué au signal optique descendant ou remontant au format NRZ-DPSK, de réduire considérablement l'encombrement spectral de ce signal et de le rendre 3 à 4 fois plus résistant à la dispersion chromatique accumulée dans le réseau passif PON que le signal optique au format NRZ-DPSK.

Un tel filtrage Gaussien peut être réalisé dans le domaine optique par un filtre de type FBG (Fiber Bragg Grating), très simple à réaliser et peu coûteux.

On notera que, dans le domaine des réseaux de transport longue distance, la conversion d'un signal au format duobinaire se fait généralement par filtrage d'une séquence de données binaires du signal optique transmis, dans le domaine électrique, à partir d'un filtre de Bessel passe-bas d'ordre 5.

De façon préférentielle, la plage de réglage est comprise entre 56% et 60%.

Selon un autre aspect de l'invention, lesdits moyens de génération et d'émission d'un signal optique remontant modulé en phase au format NRZ-DPSK à partir dudit deuxième signal optique descendant modulé en phase au format NRZ-DPSK reçu comprennent des moyens de nettoyage de la phase dudit deuxième signal optique descendant, des moyens d'amplification du signal optique descendant nettoyé, des moyens de modulation de phase aptes à fournir ledit signal optique remontant modulé en phase au format NRZ-DPSK et des moyens de circulations à trois branches, aptes à recevoir ledit deuxième signal optique descendant sur une première branche, à envoyer ledit deuxième signal optique descendant auxdits moyens de nettoyage de phase par une deuxième branche, à recevoir le signal optique remontant généré sur une troisième branche et à l'envoyer sur ladite fibre optique.

L'avantage des moyens de génération selon l'invention est de réutiliser le signal optique descendant du central optique dans le module de terminaison de ligne chez l'abonné pour produire un signal optique remontant, en profitant de l'amplitude constante du signal optique descendant modulé en phase au format NRZ-DPSK. De tels moyens sont capables de remoduler le signal optique descendant, de façon à éviter d'avoir recours à un laser additionnel chez chaque client du réseau PON.

On notera, que s'il est bien connu de l'homme du métier de remoduler un signal optique descendant pour générer un signal optique remontant, la remodulation effectuée est généralement une remodulation d'amplitude et non de phase. L'avantage de la remodulation de phase est qu'elle permet de générer un signal optique remontant modulé en phase au format NRZ-DPSK et de lui appliquer au niveau du central optique la même compensation de DC qu'au signal optique descendant.

Selon encore un autre aspect de l'invention, ledit central optique comprend des premiers moyens d'amplification de la puissance optique du signal optique descendant, aptes à émettre un premier signal d'amplification descendant dans ladite fibre optique;
- ladite fibre optique comprend au moins un premier milieu d'amplification passif apte à être excité par ledit premier signal d'amplification;
- ledit réseau optique passif comprend des deuxièmes moyens d'amplification de la puissance optique du signal optique descendant, aptes à émettre un deuxième signal d'amplification remontant dans ladite fibre optique;
- ladite fibre optique comprend un deuxième milieu d'amplification apte à être excité par ledit deuxième signal d'amplification.

Selon cet aspect de l'invention, le réseau optique passif met en oeuvre des moyens d'amplification déportés, qui, en amplifiant les signaux optiques transportés par la fibre optique, dans le sens descendant comme dans le sens remontant, permettent d'augmenter la portée du réseau optique passif, tout en lui conservant son caractère passif.

Un tel réseau optique passif permet, d'une part, de compenser l'augmentation de dispersion chromatique induite par une augmentation du débit de transmission et, d'autre part, de répondre à un besoin d'augmenter la portée des réseaux optiques passifs pour pouvoir desservir les abonnés situés dans les zones rurales. En effet, si la portée des réseaux d'accès optiques passifs selon l'art antérieur est suffisante dans les zones urbaines où les abonnés sont situés à des distances relativement faibles des centraux optiques, de l'ordre de 5 à 10 km, ce n'est pas le cas des abonnés situés dans les zones rurales. Dans ces zones, les abonnés sont souvent dispersés géographiquement et sont donc le plus souvent situés à une distance des centraux optiques supérieure à la portée classique d'un réseau optique passif. Ces abonnés ne peuvent donc pas bénéficier de la transmission haut débit offerte par les réseaux optiques passifs et par conséquent des services offerts qui nécessitent une connexion à haut débit.

Par ailleurs, il est connu que le phénomène de dispersion chromatique s'accentue, non seulement avec une augmentation du débit de transmission, mais aussi avec une augmentation de portée d'un réseau optique. Par conséquent, pour un réseau d'accès optique passif de plus grande portée, par exemple 100 km, le phénomène de dispersion chromatique devient gênant à des débits bien plus faibles que pour un PON de portée classique, typiquement dès 10 Gbits/s. Il apparaît donc particulièrement avantageux de combiner augmentation de portée et compensation de dispersion chromatique dans un réseau optique passif.

L'invention concerne également un central optique pouvant être relié par au moins une fibre optique bidirectionnelle à au moins un dispositif de terminaison de ligne dans un réseau optique passif, ledit central comprenant :
des premiers moyens d'émission d'un signal optique de données descendant modulé en phase au format NRZ-DPSK et des deuxièmes moyens de réception d'un signal optique remontant émis par ledit au moins un dispositif de terminaison de ligne.
Selon l'invention, ledit central optique comprend en outre :
   un circulateur apte à transmettre le signal optique de données descendant dans ladite fibre optique bidirectionnelle et à recevoir le signal optique remontant depuis ladite fibre optique bidirectionnelle ; et
   préalablement auxdits deuxièmes moyens de réception, des deuxièmes moyens de conversion dudit signal optique remontant modulé en phase au format NRZ-DPSK en un signal optique de données modulé en amplitude au format de modulation duobinaire, lesdits moyens de réception étant aptes à recevoir ledit signal optique remontant modulé en amplitude au format de modulation duobinaire.

L'invention concerne en outre un dispositif de terminaison de ligne pouvant être utilisé dans un réseau optique passif comprenant un central optique relié par au moins une fibre optique bidirectionnelle audit dispositif de terminaison de ligne dudit réseau, ledit dispositif de terminaison de ligne comprenant des moyens de couplage aptes à diviser la puissance optique du signal optique descendant modulé en phase au format NRZ-DPSK, transmis sur la fibre optique bidirectionnelle de façon à obtenir un premier et un deuxième signal optique descendant transmis, des premiers moyens de réception optique et des deuxièmes moyens de génération et émission d'un signal optique remontant à partir dudit deuxième signal optique descendant.

Selon l'invention, ledit dispositif de terminaison de ligne comprend en outre :
un circulateur apte à apte à faire circuler les signaux optiques descendant et remontant dans ladite fibre optique bidirectionnelle ;
des moyens de conversion dudit premier signal optique descendant, modulé en phase au format NRZ-DPSK, en un signal optique de données modulé en amplitude au format de modulation duobinaire,
lesdits premiers moyens de réception optique étant aptes à recevoir ledit signal optique de données modulé en amplitude au format de modulation duobinaire; et
lesdits moyens de génération et d'émission d'un signal optique remontant étant aptes à générer et émettre un signal optique remontant modulé en phase au format NRZ-DPSK à partir dudit deuxième signal optique descendant reçu.

L'invention concerne aussi un procédé d'émission d'un signal optique descendant et de réception d'un signal optique remontant dans un réseau optique passif comprenant un central optique relié par au moins une fibre optique bidirectionnelle à au moins un dispositif de terminaison de ligne dudit réseau, ledit procédé comprenant une étape d'émission d'un signal optique de données descendant modulé en phase au format NRZ-DPSK et une étape de réception d'un signal optique remontant.

Selon l'invention, un tel procédé comprend en outre, préalablement à l'étape de réception d'un signal optique remontant, une étape de conversion dudit signal optique remontant modulé en phase au format NRZ-DPSK en un signal optique remontant modulé en amplitude au format de modulation duobinaire.

L'invention concerne enfin un procédé de réception d'un signal optique descendant et d'émission d'un signal optique remontant dans un réseau optique passif comprenant un central optique relié par au moins une fibre optique bidirectionnelle à au moins un dispositif de terminaison de ligne dudit réseau, ledit procédé comprenant une étape de couplage, destinée à diviser la puissance optique du signal optique descendant transmis sur la fibre optique bidirectionnelle (40ᵢ) de façon à obtenir un premier et un deuxième signal optique descendant; et une étape de génération et émission d'un signal optique remontant à partir dudit deuxième signal optique descendant.

Selon l'invention, un tel procédé comprend en outre une étape de conversion dudit premier signal optique descendant modulé en phase au format NRZ-DPSK transmis en un signal optique de données modulé en amplitude au format de modulation duobinaire et une étape de réception dudit signal optique de données modulé en amplitude au format de modulation duobinaire, l'étape de génération et d'émission d'un signal optique remontant comprenant la génération et l'émission du signal optique remontant, modulé en phase au format NRZ-DPSK, à partir dudit deuxième signal optique descendant reçu.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente, de façon schématique, un réseau d'accès optique passif selon l'art antérieur;
- la figure 2 présente, de façon schématique, un réseau d'accès optique passif haut débit selon l'invention;
- la figure 3 présente, de façon schématique, les moyens de génération d'un signal optique remontant à partir d'un signal optique descendant reçu selon l'invention; et
- la figure 4 présente, de façon schématique, un réseau d'accès optique passif haut débit selon l'invention, présentant en outre une longue distance.

### 6. Description d'un mode de réalisation particulier de l'invention

Le principe général de l'invention repose sur la compensation de la dispersion chromatique en réception d'un signal optique transmis sur la fibre optique du réseau optique passif selon l'invention sur la voie descendante comme sur la voie montante. Une telle compensation est réalisée par conversion du signal modulé en phase au format NRZ-DPSK transmis sur la fibre optique en un signal modulé en amplitude au format duobinaire, lequel format est 3 à 4 fois plus résistant à la dispersion chromatique que les autres formats.

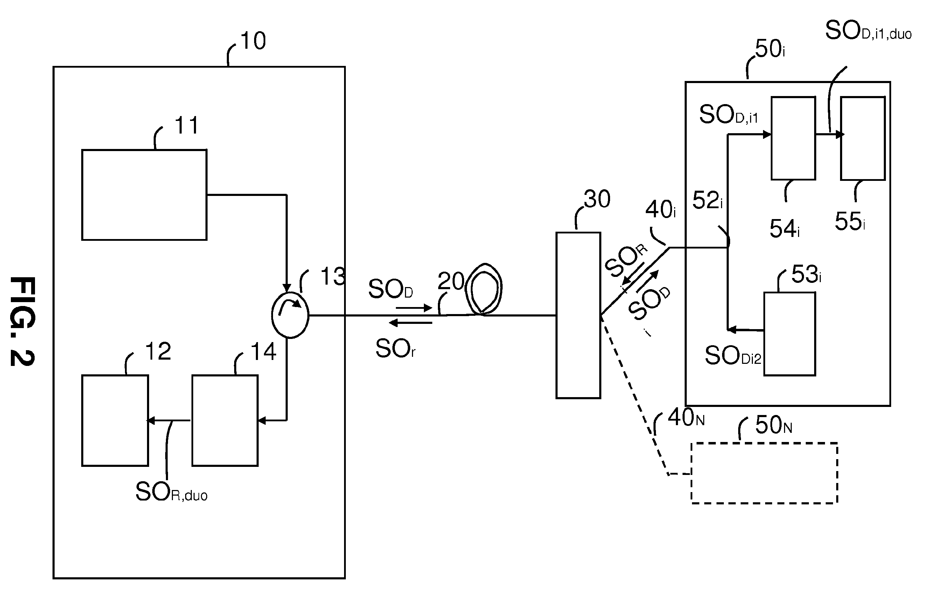

En référence à la figure 2, on présente un réseau d'accès optique 1 selon l'invention. Un tel réseau 1 est adapté à la transmission de données à un débit de base de 10 Gbits/s et plus. Il comprend un central optique 10 relié par une fibre optique 20 bidirectionnelle à un élément de distribution 30 1 vers N, N entier supérieur ou égal à 1, apte à distribuer un signal optique descendant à N dispositifs de terminaison de ligne 50₁ à 5O_{N} et à multiplexer N signaux optiques remontants émis par les N dispositifs de terminaisons de lignes 50₁ à 50_{N} à destination du central optique 10. L'élément de distribution est relié aux dispositifs de terminaison de lignes 50₁ à 50_{N} par N fibres optiques 40₁ à 40_{N}.

Les moyens d'émission 11 du central optique 10 sont aptes à émettre un signal optique SO_{D,e} modulé en phase au format NRZ-DPSK. Un tel signal présente une amplitude constante.

Le central optique 10 comprend, en plus des moyens d'émission 11 d'un signal optique SO_{D,e}, des moyens de réception 12 d'un signal optique remontant SO_{R} et d'un circulateur 13, des deuxièmes moyens de conversion 14 dudit signal optique remontant modulé en phase au format NRZ-DPSK reçu SO_{R} en un signal optique de données modulé en amplitude au format de modulation duobinaire SO_{R,duo}, destiné à être présenté en entrée desdits deuxièmes moyens de réception 12.

Le procédé d'émission d'un signal optique descendant et de réception d'un signal optique remontant selon l'invention, mis en oeuvre par le central optique 10 est également illustré par la figure 2.

De façon préférentielle, de tels moyens de conversion comprennent un filtre gaussien, dont la largeur à mi-hauteur est située entre 50% et 65% du débit de base, la plage de réglage optimale étant comprise entre 56% et 60%. Par exemple, pour un débit de base de 10 Gbits/s, sa largeur à mi-hauteur est comprise entre 5 GHz et 6.5 GHz, la plage de réglage optimale étant comprise entre 5.6 GHz et 6 GHz. Le signal optique duobinaire, obtenu par filtrage gaussien étroit du signal NRZ-DPSK, est beaucoup plus robuste à l'interférence entre symboles (IES), que provoque la dispersion chromatique. Le format duobinaire obtenu est décrit plus en détails dans l'article intitulé "Performance comparison of Duobinary Modulation Formats for 40GBs Long-Haul WDM Transmissions", par Tan et al, publié lors de la conférence ECOC, qui s'est tenue à Cannes, FRANCE en septembre 2006.

Un tel format présente une double modulation :
- une modulation en amplitude qui porte l'information véhiculée par le signal optique;
- une modulation en phase qui ne porte pas d'informations mais qui confère à ce format d'intéressantes propriétés de robustesse à l'IES.
C'est la combinaison du spectre étroit et de la superposition de la modulation d'amplitude à la modulation de phase, qui lui confère une très bonne résistance à la dispersion chromatique.

On notera toutefois que la conversion du signal optique modulé en phase au format NRZ-DPSK en un signal modulé en amplitude au format duobinaire, peut également être mise en oeuvre par d'autres moyens de filtrage, par exemple un filtre de Mach-Zehnder Delay Interferometer (MZDI). Un tel filtre est alors configuré pour introduire un retard d'un temps bit au signal optique et fournir en sortie la somme du signal optique et du même signal optique retardé d'un temps bit. Les tests effectués en laboratoire mettent toutefois en avant une plus grande capacité du filtre Gaussien à compenser la distorsion chromatique.

Un autre avantage d'une telle conversion réside dans le fait que le format duobinaire a une occupation spectrale restreinte. Or, la dispersion chromatique agit différemment sur les différentes longueurs d'onde constitutives d'un spectre, notamment elle distord d'autant plus le signal que les raies du spectre sont éloignées. Il s'ensuite que restreindre l'occupation spectrale a pour effet de réduire l'impact de la dispersion chromatique sur le signal optique transmis, d'où l'intérêt du format duobinaire.

On notera que, dans cette gamme de valeurs de 50 à 65% du débit de base, la gamme de 56 à 60%, conduit à des résultats optimaux en termes de réduction de la dispersion chromatique sur le signal optique transmis.

Le signal duobinaire obtenu est présenté aux moyens de réception 12 dudit central optique. On notera que de tels moyens doivent simplement être adaptés à recevoir des signaux optiques modulés en amplitude au format NRZ-OOK (On Off Keying), le format duobinaire ne demandant pas d'adaptation particulière.

Le dispositif de terminaison de ligne 50ᵢ selon l'invention comprend, en plus du circulateur 51ᵢ et des moyens de couplage 52ᵢ, des premiers moyens de conversion 54ᵢ dudit premier signal optique descendant modulé en phase au format NRZ-DPSK reçu SO_{Di,1} en un signal optique de données modulé en amplitude au format de modulation duobinaire SO_{D,i,duo}, destiné à être présenté en entrée desdits premiers moyens de réception 55ᵢ.

Selon l'invention, les moyens de génération 53ᵢ sont aptes à générer un signal optique remontant modulé en phase au format NRZ-DPSK SO_{Ri,e} à partir dudit deuxième signal optique descendant reçu SO_{Di,2} et à l'envoyer au circulateur 51ᵢ pour émission sur la fibre optique de ligne 40ᵢ.

Le procédé de réception d'un signal optique descendant et d'émission d'un signal optique remontant mis en oeuvre par les dispositifs de terminaison de ligne 50₁ à 50_{N} selon l'invention est également illustré par la figure 2.

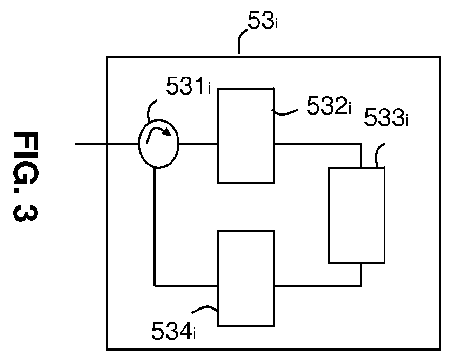

En référence à la figure 3, on présente des moyens de génération 53ᵢ d'un signal optique remontant SO_{Ri} à partir du deuxième signal descendant reçu SO_{D,i2} selon un aspect de l'invention. De tels moyens comprennent un circulateur 531ᵢ apte à faire circuler les signaux descendants reçus SO_{D,ri} et les signaux remontants SO_{Ri,e} émis dans la fibre de ligne 40ᵢ. Par une première branche, le circulateur 531ᵢ envoie le signal optique descendant reçu dans des moyens de nettoyage de phase 532ᵢ, typiquement un modulateur à électro absorption (MEA), aptes à "nettoyer" ou effacer la phase du signal optique NRZ-DPSK descendant reçu. De façon avantageuse, le MEA est polarisé à son point de transmission maximale, de façon à entraîner un niveau minimal de pertes de puissance. Le signal à amplitude constante, "nettoyé" en phase, est alors envoyé à des moyens d'amplification 533ᵢ, typiquement un amplificateur optique à semi-conducteur (Semi-Conductor Optical Amplifier, SOA en anglais), afin de compenser les pertes de puissance introduites par la transmission dans le sens descendant et par le MEA. Le signal amplifié obtenu est présenté en entrée de moyens de modulation de phase 534ᵢ, ou modulateur de phase MP, qui effectuent un encodage des données à remonter au central optique au format NRZ-DPSK. On notera qu'il peut être utile d'ajouter un deuxième amplificateur de type SOA pour anticiper les pertes de puissance introduites par le MP.

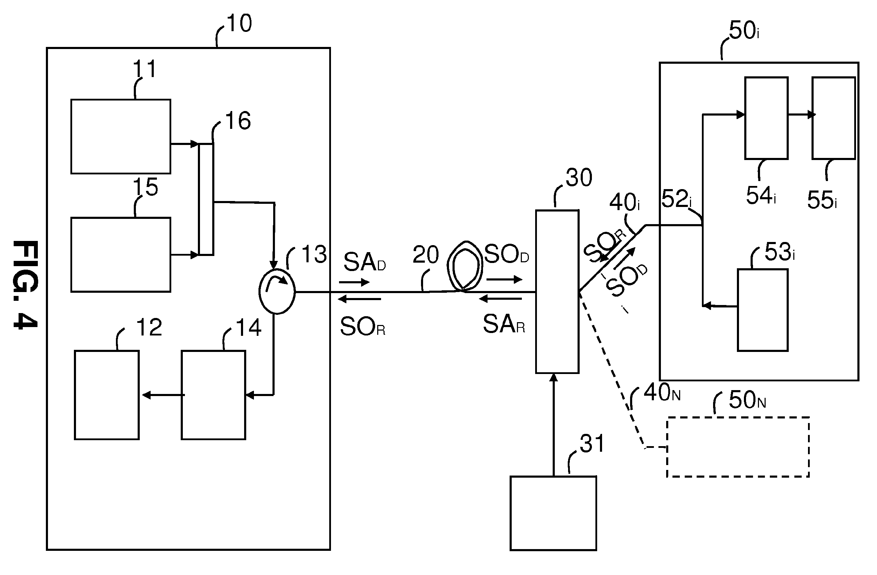

En référence à la figure 4, on présente maintenant un réseau optique passif haut débit et longue distance selon un autre aspect de l'invention. Les éléments constitutifs du réseau communs au réseau décrit en référence aux figures précédentes portent les mêmes références et ne seront pas décrits.

Le central optique 10 comprend des premiers moyens d'amplification 15 de la puissance optique du signal optique descendant, par exemple au moins une diode laser, aptes à émettre un signal d'amplification descendant SA_{D} dans ladite fibre optique 40. Ce signal d'amplification est apte à exciter un premier milieu d'amplification passif, placé dans la fibre de ligne 40, de sorte à amplifier le signal optique descendant SO_{D}. On parle d'amplification déportée. Dans cet exemple, le mode d'amplification utilisée est une amplification distribuée ou amplification basée sur l'effet Raman. Une telle amplification est distribuée tout le long de la fibre de ligne 40. Avec ce mode d'amplification, le premier milieu d'amplification est la fibre de ligne elle-même.

Le réseau optique passif 1 comprend également des deuxièmes moyens d'amplification 31 de la puissance optique du signal optique descendant SO_{D}, aptes à émettre un deuxième signal d'amplification SA_{R} remontant dans ladite fibre optique. Ce deuxième signal d'amplification est apte à exciter un deuxième milieu d'amplification passif, placé dans la fibre de ligne 40, de sorte à amplifier les signaux optiques descendant SO_{D} et remontant SO_{R}.

Dans cet exemple, la fibre optique fait aussi office de deuxième milieu d'amplification des signaux optiques. Un tel mode de réalisation permet donc d'amplifier les signaux remontants et les signaux descendants dans le même milieu d'amplification à partir de l'effet Raman.

Plus précisément, les signaux optiques d'amplification SA_{D} et SA_{R} émis respectivement par les diodes laser 15 et 31, permettent d'exciter les modes de vibrations acoustiques (phonons) des molécules de la matrice de silice SiO₂ de la fibre optique 20 constitutive du réseau. En revenant à leur état non excité, les molécules de la matrice de silice SiO₂ de la fibre optique 40 libèrent de l'énergie par émission stimulée sous forme de photons ayant même longueur d'onde que les signaux descendants et remontants, qui est donc différente de celle des signaux optiques d'amplification. Ainsi, en traversant la fibre optique dont les molécules ont été excitées par le signal optique d'amplification, le signal optique de données voit sa puissance amplifiée de manière distribuée lors de sa propagation dans la fibre 20.

La longueur d'onde de la composante optique d'amplification est choisie de manière ce que la longueur d'onde des photons émis lors du retour à l'état non excité des molécules de silice de la fibre optique corresponde à la longueur d'onde du signal à amplifier. A titre d'exemple, pour amplifier une composante optique de donnée de longueur d'onde 1550 nanomètres, la composante optique d'amplification est émise à une longueur d'onde de 1450 nanomètres. Pour les signaux optiques de données descendant et remontant émis par le central optique et les dispositifs de terminaison de ligne, c'est le signal d'amplification émis par les moyens d'amplification 15 et 31 qui libère de l'énergie à la même longueur d'onde que lui.

On notera qu'il existe deux technologies principales pour émettre les signaux optiques descendants et remontants, la première étant TDM, la deuxième étant WDM, et que, selon la technologie d'émission choisie, la mise en oeuvre de l'amplification déportée diffère.

Considérons d'abord le premier cas d'un réseau d'accès passif mettant en oeuvre la technologie TDM, basé sur un accès multiple temporel aux données transmises. En d'autres termes, le central optique comprend une seule diode laser 11 qui émet un signal optique descendant sur une seule longueur d'onde, cette longueur d'onde étant partagée temporellement entre les abonnés. Dans ce cas, l'élément de distribution 30 est un coupleur 1 vers N qui divise la puissance du signal optique descendant en N sous-signaux contenant les mêmes données, destinés aux N dispositifs de terminaisons de ligne. C'est ensuite au récepteur d'un dispositif de terminaison de ligne 50i d'extraire les données pertinentes pour le ou les abonnés, sur la base d'un séquencement temporel.

Dans ce premier mode de réalisation d'un réseau optique passif haut débit et longue distance, les moyens d'amplifications 15 et 31 émettent un signal d'amplification à une seule longueur d'onde, par exemple à 1450 nm pour les signaux optiques descendant et remontant émis à la longueur d'onde de 1550 nm.

Dans un deuxième mode de réalisation d'un réseau optique passif haut débit et longue distance, la technologie WDM est utilisée, basée sur la répartition des ressources en longueur d'ondes. Autrement dit, on alloue à un abonné une longueur d'onde. Dans ce cas, l'élément de distribution de ligne 30 est un multiplexeur/démultiplexeur optique 1 vers N, qui filtre le signal optique descendant SOD et ne route vers un abonné que la partie de ce signal qui le concerne et qui, dans le sens remontant, multiplexe les signaux remontants émis, à des longueurs d'onde différentes par les différents dispositifs de terminaison de lignes. Par rapport au réseau passif TDM, le réseau d'accès WDM est plus coûteux, car il utilise un plus grand nombre de longueurs d'ondes et un élément de routage. En revanche, sa mise en oeuvre est plus simple et plus sécurisante pour les abonnés, car une longueur d'onde est affectée à un abonné et le démultiplexeur optique atténue beaucoup moins le signal transmis que ne le fait le coupleur.

Avec un réseau d'accès WDM, les moyens d'amplification 15 et 31 doivent générer des signaux d'amplification à au moins trois longueurs d'onde différentes, typiquement 1435, 1450 et 1465 nm pour assurer un gain plat sur la totalité de la bande C.

On notera également qu'il existe au moins une alternative à l'amplification Raman. Il s'agit de l'amplification déportée par insertion d'une section de fibre dopée à l'erbium dans la fibre de ligne 20. Une telle section de fibre constitue le milieu d'amplification. En injectant une longueur d'onde d'excitation dans la section de fibre dopée à l'erbium, il est possible d'amplifier le signal optique de données transitant par cette branche du réseau. Une telle technique d'amplification est appelée technique d'amplification optique déportée ou ROPA, pour Remote Optically Pumped Amplification.

Une seule diode laser est nécessaire pour exciter les atomes d'erbium présents dans le milieu d'amplification, même dans le cas d'un réseau d'accès WDM. En effet, en retournant à leur état d'équilibre, les atomes d'erbium libèrent des photons selon une pluralité de longueurs d'ondes distinctes mais dont les valeurs constituent une plage. Ainsi, si un signal optique a ses données portées par une longueur d'onde située dans cette plage de valeur, il voit sa puissance optique amplifiée. Lorsque le réseau utilise le multiplexage en longueur d'onde, les composantes optiques de données émises par le central optique sont associées à des longueurs d'ondes comprises dans une plage de valeur donnée correspondant à la plage de valeur de longueurs d'onde que la section de fibre dopée à l'erbium est apte à amplifier.

On notera enfin qu'il est possible d'utiliser les deux types d'amplification dans un même réseau, par exemple l'amplification Raman pour le premier milieu (la fibre de ligne 20) et l'amplification ROPA pour le deuxième milieu et vice et versa.

Les deux tableaux suivants indiquent à titre d'exemple les bilans de puissance optique respectivement dans le sens descendant et dans le sens remontant correspondant à un réseau optique passif haut débit longue portée, de l'ordre de 100 km, à 10 Gbits/s, dans lequel le premier et le deuxième milieux d'amplification sont la fibre de ligne 20. Les tableaux 1 et 2 concernent le cas d'un réseau TDM, les tableaux 3 et 4 le cas d'un réseau WDM.

**Tableau 1**

| **SENS DESCENDANT** | |
|---|---|
| Pertes de la fibre à 1550 nm | 20 dB (SSMF) |
| Composants optiques en ligne | 15 dB (coupleur 1:32); 8 dB (multiplexeur WDM + circulateurs + coupleur 50/50 + filtre duobinaire chez l'abonné) |
| Puissance de l'émetteur au central | 3 dBm |
| Gain Raman aller à 1550 nm | 20 dB |
| **Puissance reçue sur la photodiode d'abonné** | **-20 dBm** |

**Tableau 2**

| **SENS REMONTANT** | |
|---|---|
| Pertes de la fibre à 1550 nm retour | 20 dB (SSMF) |
| Composants optiques en ligne | 15 dB (coupleur 1:32) ; 8 dB (multiplexeur WDM + circulateurs + coupleur 50/50 + filtre duobinaire au central) |
| Puissance incidente sur module de réémission d'abonné | -18 dBm |
| Gain SOA chez l'abonné | 20 dB |
| Gain Raman retour à 1550 nm | 20 dB |
| Rétrodiffusion de Rayleigh sur fibre aller à 1550 n m | -30 dBm |
| **Puissance reçue au central** | **-21 dBm** |

**Tableau 3**

| **SENS DESCENDANT** | |
|---|---|
| Pertes de la fibre à 1550 nm | 20 dB (SSMF) |
| Composants optiques en ligne | 5 dB (Demux 1:40); 8 dB (multiplexeur WDM + circulateurs + coupleur 50/50 + filtre duobinaire chez l'abonné) |
| Puissance de l'émetteur au central | 3 dBm |
| Gain Raman aller à 1550 nm | 20 dB |
| **Puissance reçue sur la photodiode d'abonné** | **-10 dBm** |

**Tableau 4**

| **SENS REMONTANT** | |
|---|---|
| Pertes de la fibre à 1550 nm retour | 20 dB (SSMF) |
| Composants optiques en ligne | 5 dB (Demux 1:40); 8 dB (multiplexeur WDM + circulateurs + coupleur 50/50 + filtre duobinaire au central) |
| Puissance incidente sur module de réémission d'abonné | -8 dBm |
| Gain SOA chez l'abonné | 20 dB |
| Gain Raman retour à 1550 nm | 20 dB |
| Rétrodiffusion de Rayleigh sur fibre aller à 1550 nm | -30 dBm |
| **Puissance reçue au central** | **-1 dBm** |

Dans ces tableaux, on voit que les budgets optiques correspondant aux sens de transmission descendant et remontant sont équilibrés. Dans le sens remontant, on constate que la valeur de la puissance optique reçue par le central optique 10 est supérieure à la puissance du signal optique de rétrodiffusion Rayleigh. Ainsi, les moyens de réception placés dans le central optique 10 ne sont pas éblouis par le signal rétrodiffusé et la réception des composantes optiques de données remontantes n'est pas perturbée.

Avec l'un ou l'autre de ces deux modes de réalisation, l'invention permet donc de réaliser un réseau optique passif haut débit, longue portée, robuste à la DC. A titre d'exemple, la portée obtenue est de l'ordre de 100 km, alors que les réseaux d'accès passifs classiques ont une portée réduite à 20 km. Ceci est rendu possible par la conjonction de deux facteurs :
- l'introduction de moyens d'amplification déportés permettant d'amplifier les signaux optiques transmis tout en conservant au réseau son caractère passif; et
- la compensation de la dispersion chromatique, par l'utilisation d'une modulation duobinaire sur les modules de réception aussi bien côté abonné que côté central fortement résistante à l'IES.

Une telle augmentation de portée permet notamment à un réseau d'accès longue distance selon l'invention de jouer à lui seul le rôle de réseau d'accès et de réseau de collecte. Un avantage est de supprimer un central qui se trouve généralement situé à la frontière entre réseau d'accès et réseau de collecte et dont un rôle est d'amplifier les signaux optiques transmis.

De façon avantageuse, les moyens d'amplification 31 peuvent être placés à l'emplacement de ce central et donc bénéficier de sources d'alimentation mutualisées.

## Revendications

1. Réseau optique passif comprenant un central optique (10) relié par au moins une fibre optique bidirectionnelle (20,40₁,40_{N}) à au moins un dispositif de terminaison de ligne (50₁,50_{N}) dudit réseau,
ledit central optique (10) comprenant des premiers moyens d'émission (11) d'un signal optique de données descendant (SO_{D}) modulé en phase au format NRZ-DPSK et des premiers moyens de réception (12) d'un signal optique remontant (SOᵣ),
ledit dispositif de terminaison de ligne (50ᵢ) comprenant des moyens de couplage (52ᵢ) aptes à diviser la puissance optique du signal optique descendant transmis (SO_{D}) de façon à obtenir un premier et un deuxième signal optique descendant (SO_{D,i1}, SO_{Di2}), des deuxièmes moyens de réception optique (55ᵢ) et des moyens de génération et d'émission (53ᵢ) d'un signal optique remontant (SO_{Ri}) à partir du deuxième signal optique descendant (SO_{Di2}),
**caractérisé en ce que** :
ledit dispositif de terminaison de ligne (50ᵢ) comprend en outre des premiers moyens de conversion (54ᵢ) dudit premier signal optique descendant (SO_{D,i1}), modulé en phase au format NRZ-DPSK, en un signal optique de données (SO_{D,i1,duo}) modulé en amplitude au format de modulation duobinaire, lesdits deuxièmes moyens de réception optique (55ᵢ) étant aptes à recevoir ledit signal optique de données (SO_{D,i1,duo}) modulé en amplitude au format de modulation duobinaire descendant modulé en amplitude; lesdits moyens de génération et d'émission (53ᵢ) du signal optique remontant sont aptes à générer et émettre un signal optique remontant modulé en phase au format NRZ-DPSK à partir dudit deuxième signal optique descendant (SO_{Di2});
ledit central optique (10) comprend, préalablement auxdits premiers moyens de réception (12), des deuxièmes moyens de conversion (14) dudit signal optique remontant (SOᵣ), modulé en phase au format NRZ-DPSK, en un signal optique de données modulé en amplitude (SO_{R,duo}) au format de modulation duobinaire, lesdits premiers moyens de réception (12) étant aptes à recevoir ledit signal optique remontant modulé en amplitude (SO_{R,duo}) ;
les premiers moyens d'émission (11) et les premiers moyens de réception (12) du central optique (10) sont couplés à une même fibre bidirectionnelle (20) ; et
les moyens de génération et d'émission (53ᵢ) et les deuxièmes moyens de réception (55ᵢ) du dispositif de terminaison de ligne (50ᵢ) sont couplés à une même fibre bidirectionnelle (40ᵢ).

2. Réseau optique passif selon la revendication 1, **caractérisé en ce que**, le signal optique descendant ayant un débit de base donné, lesdits premiers et deuxièmes moyens de conversion (54ᵢ, 14) comprennent un filtrage gaussien dont la largeur à mi-hauteur appartient à une plage de valeurs correspondant à un pourcentage compris entre 50 et 65 % dudit débit de base.

3. Réseau optique passif selon l'une quelconque des revendications 1 à 2, **caractérisé en ce que** lesdits moyens de génération et d'émission (53ᵢ) d'un signal optique remontant modulé en phase au format NRZ-DPSK à partir dudit deuxième signal optique descendant modulé en phase au format NRZ-DPSK reçu comprennent des moyens de nettoyage (532ᵢ) de la phase dudit deuxième signal optique descendant, des moyens d'amplification (533ᵢ) du signal optique descendant nettoyé, des moyens de modulation de phase (534ᵢ) aptes à fournir ledit signal optique remontant modulé en phase au format NRZ-DPSK et des moyens de circulation à trois branches (531ᵢ), aptes à recevoir ledit deuxième signal optique descendant sur une première branche, à envoyer ledit deuxième signal optique descendant auxdits moyens de nettoyage de phase par une deuxième branche, à recevoir le signal optique remontant généré sur une troisième branche et à l'envoyer sur ladite fibre optique.

4. Réseau optique passif selon l'une quelconque des revendications 1 à 3, **caractérisé en ce que** :
- ledit central optique comprend des premiers moyens d'amplification (15) de la puissance optique du signal optique descendant (SOD), aptes à émettre un premier signal d'amplification (SA_{D}) descendant dans ladite fibre optique (20);
- ladite fibre optique (20) comprend au moins un premier milieu d'amplification passif apte à être excité par ledit premier signal d'amplification (SA_{D}) ;
- ledit réseau optique passif comprend des deuxièmes moyens d'amplification (31) de la puissance optique du signal optique descendant (SO_{D}), aptes à émettre un deuxième signal d'amplification (SA_{R}) remontant dans ladite fibre optique;
- ladite fibre optique comprend un deuxième milieu d'amplification apte à être excité par ledit deuxième signal d'amplification (SA_{R}).

5. Central optique (10), pouvant être relié par au moins une fibre optique bidirectionnelle (20) à au moins un dispositif de terminaison de ligne (50ᵢ) dans un réseau optique passif, ledit central comprenant :
des premiers moyens d'émission (11) d'un signal optique de données descendant (SOD) modulé en phase au format NRZ-DPSK ;
des deuxièmes moyens de réception (12) d'un signal optique remontant (SOᵣ) émis par ledit au moins un dispositif de terminaison de ligne (50ᵢ),
ledit central optique étant **caractérisé en ce qu'**il comprend en outre :
un circulateur (13) apte à transmettre le signal optique de données descendant (SO_{D}) dans ladite fibre optique bidirectionnelle (20) et à recevoir le signal optique remontant (SOᵣ) depuis ladite fibre optique bidirectionnelle (20); et
préalablement auxdits deuxièmes moyens de réception (12), des deuxièmes moyens de conversion (14) dudit signal optique remontant, modulé en phase au format NRZ-DPSK, en un signal optique de données modulé en amplitude au format de modulation duobinaire (SO_{R,duo}), lesdits deuxièmes moyens de réception étant aptes à recevoir ledit signal optique remontant modulé en amplitude au format de modulation duobinaire.

6. Dispositif de terminaison de ligne (50ᵢ), pouvant être utilisé dans un réseau optique passif comprenant un central optique (10) pouvant être relié par au moins une fibre optique bidirectionnelle (40ᵢ) audit dispositif de terminaison de ligne dudit réseau, ledit dispositif de terminaison de ligne (50ᵢ) comprenant :
des moyens de couplage (52ᵢ) aptes à diviser la puissance optique d'un signal optique descendant (SO_{Di}), modulé en phase au format NRZ-DPSK, transmis sur la fibre optique bidirectionnelle (40ᵢ) de façon à obtenir un premier et un deuxième signal optique descendant (SO_{D,i1}, SO_{Di2});
des premiers moyens de réception optique (55ᵢ) ; et
des deuxièmes moyens de génération et émission (53ᵢ) d'un signal optique remontant (SO_{Ri}), à partir dudit deuxième signal optique descendant (SO_{Di2}),
ledit dispositif de terminaison de ligne étant **caractérisé en ce qu'**il comprend en outre :
un circulateur apte à apte à faire circuler les signaux optiques descendant (SO_{Di}) et remontant (SO_{Ri}) dans ladite fibre optique bidirectionnelle (40i) ;
des moyens de conversion (54ᵢ) dudit premier signal optique descendant (SO_{D,i1,}), modulé en phase au format NRZ-DPSK, en un signal optique de données (SO_{D,i1}, _{duo}) modulé en amplitude au format de modulation duobinaire ;
lesdits premiers moyens de réception optique (55ᵢ) étant aptes à recevoir ledit signal optique de données (SO_{D,i1, duo}) modulé en amplitude au format de modulation duobinaire et lesdits deuxièmes moyens de génération et d'émission (53ᵢ) étant aptes à générer et émettre le signal optique remontant (SO_{Ri}), modulé en phase au format NRZ-DPSK, à partir dudit deuxième signal optique descendant (SO_{Di2}).

7. Procédé d'émission d'un signal optique descendant et de réception d'un signal optique remontant dans un réseau optique passif comprenant un central optique (10) relié par au moins une fibre optique bidirectionnelle (20,40₁,40_{N}) à au moins un dispositif de terminaison de ligne (50₁,50_{N}) dudit réseau, ledit procédé comprenant :
une étape d'émission d'un signal optique de données descendant (SO_{D}) modulé en phase au format NRZ-DPSK ;
une étape de réception d'un signal optique remontant (SOᵣ),
ledit procédé étant **caractérisé en ce qu'**il comprend en outre, préalablement à l'étape de réception d'un signal optique remontant, une étape de conversion dudit signal optique remontant (SOᵣ), modulé en phase au format NRZ-DPSK, en un signal optique remontant (SO_{R,duo}) modulé en amplitude au format de modulation duobinaire.

8. Procédé de réception d'un signal optique descendant et d'émission d'un signal optique remontant dans un réseau optique passif comprenant un central optique (10) relié par au moins une fibre optique bidirectionnelle (20,40₁,40_{N}) à au moins un dispositif de terminaison de ligne (50₁,50_{N}) dudit réseau, ledit procédé comprenant :
une étape de couplage, destinée à diviser la puissance optique d'un signal optique descendant (SO_{Di}) transmis sur la fibre optique bidirectionnelle (40ᵢ) de façon à obtenir un premier et un deuxième signal optique descendant (SO_{D,i1}, SO_{Di2}) ; et
une étape de génération et d'émission d'un signal optique remontant (SO_{Ri}) à partir dudit deuxième signal optique descendant (SO_{Di2}) reçu;
ledit procédé étant **caractérisé en ce qu'**il comprend en outre :
une étape de conversion dudit premier signal optique descendant (SO_{D,i1}), modulé en phase au format NRZ-DPSK, en un signal optique de données (SO_{D,i1,duo}), modulé en amplitude au format de modulation duobinaire ; et
une étape de réception dudit signal optique de données (SO_{D,i1,duo}) modulé en amplitude au format de modulation duobinaire ,
l'étape de génération et d'émission d'un signal optique remontant comprenant la génération et l'émission du signal optique remontant (SO_{Ri}), modulé en phase au format NRZ-DPSK, à partir dudit deuxième signal optique descendant (SO_{Di2}).

## Patentansprüche

1. Passives optisches Netzwerk, umfassend eine optische Nabenvorrichtung (10), die durch mindestens eine bidirektionale optische Faser (20, 40₁, 40_{N}) mit mindestens einer Leitungsanschlussvorrichtung (50₁, 50_{N}) des Netzwerks verbunden ist,
wobei die optische Nabenvorrichtung (10) erste Sendemittel (11) eines phasenmodulierten absteigenden optischen Datensignals (SO_{D}) im Format NRZ-DPSK und erste Empfangsmittel (12) eines aufsteigenden optischen Signals (SOᵣ) umfasst,
wobei die Leitungsanschlussvorrichtung (50ᵢ) Kopplungsmittel (52ᵢ), die geeignet sind, die optische Leistung des übertragenen absteigenden optischen Signals (SO_{D}) zu teilen, um ein erstes und ein zweites absteigendes optisches Signal (SO_{D,i1}, SO_{Di2}) zu erhalten, zweite optische Empfangsmittel (55ᵢ) und Erzeugungs- und Sendemittel (53ᵢ) eines aufsteigenden optischen Signals (SO_{Ri}) ausgehend von dem zweiten absteigenden optischen Signal (SO_{Di2}) umfasst,
**dadurch gekennzeichnet, dass**:
die Leitungsanschlussvorrichtung (50ᵢ) ferner erste Umwandlungsmittel (54ᵢ) des ersten phasenmodulierten absteigenden optischen Signals (SO_{D,i1}) im Format NRZ-DPSK in ein amplitudenmoduliertes optisches Datensignal (SO_{D,i1,duo}) im duobinären Modulationsformat umfasst, wobei die zweiten optischen Empfangsmittel (55ᵢ) geeignet sind, das amplitudenmodulierte optische Datensignal (SO_{D,i1,duo}) im amplitudenmodulierten absteigenden duobinären Modulationsformat zu empfangen, wobei die Erzeugungs- und Sendemittel (53ᵢ) des aufsteigenden optischen Signals geeignet sind, ein phasenmoduliertes aufsteigendes optisches Signal im Format NRZ-DPSK ausgehend von dem zweiten absteigenden optischen Signal (SO_{Di2}) zu erzeugen und entsenden;
wobei die optische Nabenvorrichtung (10) vor den ersten Empfangsmitteln (12) zweite Umwandlungsmittel (14) des phasenmodulierten aufsteigenden optischen Signals (SOᵣ) im Format NRZ-DPSK in ein amplitudenmoduliertes optisches Datensignal (SO_{R,duo}) im duobinären Modulationsformat umfasst, wobei die ersten Empfangsmittel (12) geeignet sind, das amplitudenmodulierte aufsteigende optische Signal (SO_{R,duo}) zu empfangen;
die ersten Sendemittel (11) und die ersten Empfangsmittel (12) der optischen Nabenvorrichtung (10) an eine selbe bidirektionale Faser (20) gekoppelt sind; und
die Erzeugungs- und Sendemittel (53ᵢ) und die zweiten Empfangsmittel (55ᵢ) der Leitungsanschlussvorrichtung (50ᵢ) an eine selbe bidirektionale Faser (40ᵢ) gekoppelt sind.

2. Passives optisches Netzwerk nach Anspruch 1, **dadurch gekennzeichnet, dass**, wobei das absteigende optische Signal einen gegebenen Basisdurchsatz hat, die ersten und zweiten Umwandlungsmittel (54ᵢ, 14) eine Gauss'sche Filterung umfassen, deren Breite auf halber Höhe einem Wertebereich angehört, der einem Prozentsatz zwischen 50 und 65 % des Basisdurchsatzes entspricht.

3. Passives optisches Netzwerk nach einem der Ansprüche 1 bis 2, **dadurch gekennzeichnet, dass** die Erzeugungs- und Sendemittel (53ᵢ) eines phasenmodulierten aufsteigenden optischen Signals im Format NRZ-DPSK aus dem empfangenen zweiten phasenmodulierten absteigenden optischen Signal im Format NRZ-DPSK Reinigungsmittel (532ᵢ) der Phase des zweiten absteigenden optischen Signals, Verstärkungsmittel (533ᵢ) des gereinigten absteigenden optischen Signals, Phasenmodulationsmittel (534ᵢ), die geeignet sind, das phasenmodulierte aufsteigende optische Signal im Format NRZ-DPSK zu liefern, und Zirkulationsmittel mit drei Abschnitten (531ᵢ) umfassen, die geeignet sind, das zweite absteigende optische Signal auf einem ersten Abschnitt zu empfangen, das zweite absteigende optische Signal an die Phasenreinigungsmittel durch einen zweiten Abschnitt zu entsenden, das auf einem dritten Abschnitt erzeugte aufsteigende optische Signal zu empfangen und es an die optische Faser zu senden.

4. Passives optisches Netzwerk nach einem der Ansprüche 1 bis 3, **dadurch gekennzeichnet, dass**:
- die optische Nabenvorrichtung erste Verstärkungsmittel (15) der optischen Leistung des absteigenden optischen Signals (SOD) umfasst, die geeignet sind, ein erstes absteigendes Verstärkungssignal (SA_{D}) in die optische Faser (20) zu senden;
- die optische Faser (20) mindestens ein erstes passives Verstärkungsmedium umfasst, das geeignet ist, von dem ersten Verstärkungssignal (SA_{D}) erregt zu werden;
- das passive optische Netzwerk zweite Verstärkungsmittel (31) der optischen Leistung des absteigenden optischen Signals (SO_{D}) umfasst, die geeignet sind, ein zweites aufsteigendes Verstärkungssignal (SA_{R}) in die optische Faser zu senden;
- die optische Faser ein zweites Verstärkungsmedium umfasst, das geeignet ist, von dem zweiten Verstärkungssignal (SA_{R}) erregt zu werden.

5. Optische Nabenvorrichtung (10), die mit mindestens einer bidirektionalen optischen Faser (20) an mindestens einer Leitungsanschlussvorrichtung (50ᵢ) in einem passiven optischen Netzwerk verbunden werden kann, wobei die Nabenvorrichtung umfasst:
erste Sendemittel (11) eines phasenmodulierten absteigenden optischen Datensignals (SOD) im Format NRZ-DPSK;
zweite Empfangsmittel (12) eines aufsteigenden optischen Signals (SOᵣ), das von der mindestens einen Leitungsanschlussvorrichtung (50ᵢ) entsandt wird,
wobei die optische Nabenvorrichtung **dadurch gekennzeichnet ist, dass** sie ferner umfasst:
eine Zirkulationsvorrichtung (13), die geeignet ist, das absteigende optische Datensignal (SO_{D}) in die bidirektionale optische Faser (20) zu übertragen und das aufsteigende optische Signal (SOᵣ) von der bidirektionalen optischen Faser (20) zu empfangen; und
vor den zweiten Empfangsmitteln (12) zweite Umwandlungsmittel (14) des phasenmodulierten aufsteigenden optischen Signals im Format NRZ-DPSK in ein amplitudenmoduliertes optisches Datensignal (SO_{R,duo}) im duobinären Modulationsformat, wobei die zweiten Empfangsmittel geeignet sind, das amplitudenmodulierte aufsteigende optische Signal im duobinären Modulationsformat zu empfangen.

6. Leitungsanschlussvorrichtung (50ᵢ), die in einem passiven optischen Netzwerk verwendet werden kann, umfassend eine optische Nabenvorrichtung (10), die durch mindestens eine bidirektionale optische Faser (40ᵢ) mit der Leitungsanschlussvorrichtung des Netzwerks verbunden werden kann, wobei die Leitungsanschlussvorrichtung (50ᵢ) umfasst:
Kopplungsmittel (52ᵢ), die geeignet sind, die optische Leistung eines auf die bidirektionale optische Faser (40ᵢ) übertragenen phasenmodulierten absteigenden optischen Signals (SO_{Di}) im Format NRZ-DPSK zu teilen, um ein erstes und ein zweites absteigendes optisches Signal (SO_{D,i1}, SO_{Di2}) zu erhalten,
erste optische Empfangsmittel (55ᵢ); und
zweite Erzeugungs- und Sendemittel (53ᵢ) eines aufsteigenden optischen Signals (SO_{Ri}) ausgehend von dem zweiten absteigenden optischen Signal (SO_{Di2}),
wobei die Leitungsanschlussvorrichtung **dadurch gekennzeichnet ist, dass** sie ferner umfasst:
eine Zirkulationsvorrichtung, die geeignet ist, die absteigenden (SO_{Di}) und aufsteigenden (SO_{Ri}) optischen Signale in der bidirektionalen optischen Faser (40ᵢ) zirkulieren zu lassen;
Umwandlungsmittel (54ᵢ) des ersten phasenmodulierten absteigenden optischen Signals (SO_{D,i1}) im Format NRZ-DPSK in ein amplitudenmoduliertes optisches Datensignal (SO_{D,i1,duo}) im duobinären Modulationsformat;
wobei die ersten optischen Empfangsmittel (55ᵢ) geeignet sind, das amplitudenmodulierte optische Datensignal (SO_{D,i1,duo}) im duobinären Modulationsformat zu empfangen, und wobei die zweiten Erzeugungs- und Sendemittel (53ᵢ) geeignet sind, das phasenmodulierte aufsteigende optische Signal (SO_{Ri}) im Format NRZ-DPSK ausgehend von dem zweiten absteigenden optischen Signal (SO_{Di2}) zu erzeugen und entsenden.

7. Verfahren zum Senden eines absteigenden optischen Signals und zum Empfangen eines aufsteigenden optischen Signals in einem passiven optischen Netzwerk, umfassend eine optische Nabenvorrichtung (10), die durch mindestens eine bidirektionale optische Faser (20, 40₁, 40_{N}) mit mindestens einer Leitungsanschlussvorrichtung (50₁, 50_{N}) des Netzwerks verbunden ist, wobei das Verfahren umfasst:
einen Schritt des Sendens eines phasenmodulierten absteigenden optischen Datensignals (SO_{D}) im Format NRZ-DPSK;
einen Schritt des Empfangens eines aufsteigenden optischen Signals (SOᵣ),
wobei das Verfahren **dadurch gekennzeichnet ist, dass** es ferner vor dem Schritt des Empfangens eines aufsteigenden optischen Signals einen Umwandlungsschritt des phasenmodulierten aufsteigenden optischen Signals (SOᵣ) im Format NRZ-DPSK in ein amplitudenmoduliertes aufsteigendes optisches Signal (SO_{R,duo}) im duobinären Modulationsformat umfasst.

8. Verfahren zum Empfangen eines absteigenden optischen Signals und zum Senden eines aufsteigenden optischen Signals in einem passiven optischen Netzwerk, umfassend eine optische Nabenvorrichtung (10), die durch mindestens eine bidirektionale optische Faser (20, 40₁, 40_{N}) mit mindestens einer Leitungsanschlussvorrichtung (50₁, 50_{N}) des Netzwerks verbunden ist, wobei das Verfahren umfasst:
einen Kopplungsschritt, der dazu bestimmt ist, die optische Leistung eines auf die bidirektionale optische Faser (40ᵢ) übertragenen absteigenden optischen Signals (SO_{Di}) zu teilen, um ein erstes und ein zweites absteigendes optisches Signal (SO_{D,i1}, SO_{Di2}) zu erhalten; und
einen Erzeugungs- und Sendeschritt eines aufsteigenden optischen Signals (SO_{Ri}) ausgehend von dem empfangenen zweiten absteigenden optischen Signal (SO_{Di2});
wobei das Verfahren **dadurch gekennzeichnet ist, dass** es ferner umfasst:
einen Umwandlungsschritt des ersten phasenmodulierten absteigenden optischen Signals (SO_{D,i1}) im Format NRZ-DPSK in ein amplitudenmoduliertes optisches Datensignal (SO_{D,i1,duo}) im duobinären Modulationsformat; und
einen Schritt des Empfangens des amplitudenmodulierten optischen Datensignals (SO_{D,i1,duo}) im duobinären Modulationsformat;
wobei der Erzeugungs- und Sendeschritt eines aufsteigenden optischen Signals die Erzeugung und das Senden des phasenmodulierten aufsteigenden optischen Signals (SO_{Ri}) im Format NRZ-DPSK ausgehend von dem zweiten absteigenden optischen Signal (SO_{Di2}) umfasst.

## Claims

1. Passive optical network comprising an optical exchange (10) linked by at least one bidirectional optical fibre (20, 40₁, 40_{N}) to at least one line termination device (50₁, 50_{N}) of said network,
said optical exchange (10) comprising first means (11) of transmitting a downlink optical data signal (SO_{D}) phase-modulated in NRZ-DPSK format and first means (12) of receiving an uplink optical signal (SOᵣ),
said line termination device (50ᵢ) comprising coupling means (52ᵢ) able to divide the optical power of the transmitted downlink optical signal (SO_{D}) so as to obtain a first and a second downlink optical signal (SO_{D,i1}, SO_{Di2}), second optical means (55ᵢ) of receiving and means (53ᵢ) of generating and transmitting an uplink optical signal (SO_{Ri}) from the second downlink optical signal (SO_{Di2}),
**characterized in that**:
- said line termination device (50ᵢ) furthermore comprises first means (54ᵢ) of converting said first downlink optical signal (SO_{D,i1}) phase-modulated in NRZ-DPSK format into an optical data signal (SO_{D,i1,duo}) amplitude-modulated in duobinary modulation format, said second optical reception means (55ᵢ) being able to receive said amplitude-modulated downlink optical data signal (SO_{D,i1}, _{duo}) amplitude-modulated in duobinary modulation format; said means (53ᵢ) of generating and transmitting the uplink optical signal are able to generate and transmit an uplink optical signal phase-modulated in NRZ-DPSK format from said second downlink optical signal (SO_{Di2});
said optical exchange (10) comprises, prior to said first reception means (12), second means (14) of converting said uplink optical signal (SOᵣ) phase-modulated in NRZ-DPSK format into an optical data signal (SO_{R}, _{duo}) amplitude-modulated in duobinary modulation format, said first reception means (12) being able to receive said amplitude-modulated uplink optical signal (SO_{R}, _{duo});
the first transmission means (11) and the first reception means (12) of the optical exchange (10) are coupled to a same bidirectional fibre (20); and
the generation and transmission means (53ᵢ) and the second reception means (55ᵢ) of the line termination device (50ᵢ) are coupled to a same bidirectional fibre (40ᵢ).

2. Passive optical network according to Claim 1, **characterized in that**, the downlink optical signal having a given basic bit rate, said first and second conversion means (54ᵢ, 14) comprise a Gaussian filtering stage whose mid-height width falls within a range of values corresponding to a percentage of between 50 and 65% of said basic bit rate.

3. Passive optical network according to either of Claims 1 or 2, **characterized in that** said means (53ᵢ) of generating and transmitting an uplink optical signal phase-modulated in NRZ-DPSK format from said second received downlink optical signal phase-modulated in NRZ-DPSK format comprise means (532ᵢ) of cleaning the phase of said second downlink optical signal, means (533ᵢ) of amplifying the cleaned downlink optical signal, phase-modulation means (534ᵢ) able to supply said uplink optical signal phase-modulated in NRZ-DPSK format and three-branch circulation means (531ᵢ), able to receive said second downlink optical signal over a first branch, to send said second downlink optical signal to said phase-cleaning means via a second branch, to receive the uplink optical signal generated over a third branch and to send it over said optical fibre.

4. Passive optical network according to any one of Claims 1 to 3, **characterized in that**:
- said optical exchange comprises first means (15) of amplifying the optical power of the downlink optical signal (SOD), able to transmit a first downlink amplification signal (SA_{,D}) in said optical fibre (20);
- said optical fibre (20) comprises at least one first passive amplification medium able to be excited by said first amplification signal (SA_{D});
- said passive optical network comprises second means (31) of amplifying the optical power of the downlink optical signal (SO_{D}), able to transmit a second uplink amplification signal (SA_{R}) in said optical fibre;
- said optical fibre comprises a second amplification medium able to be excited by said second amplification signal (SA_{R}).

5. Optical exchange (10) which can be linked by at least one bidirectional optical fibre (20) to at least one line termination device (50ᵢ) in a passive optical network, said exchange comprising:
first means (11) of transmitting a downlink optical data signal (SOD) phase-modulated in NRZ-DPSK format;
second means (12) of receiving an uplink optical signal (SOᵣ) transmitted by said at least one line termination device (50ᵢ),
said optical exchange being **characterized in that**, it further comprises:
a circulator (13) able to transmit the downlink optical data signal (SO_{D}) in said bidirectional optical fibre (20) and to receive the uplink optical signal (SOᵣ) from said bidirectional optical fibre (20); and
prior to said second reception means (12), second means (14) of converting said uplink optical signal phase-modulated in NRZ-DPSK format into an optical data signal amplitude-modulated in duobinary modulation format (SO_{R, duo}), said second reception means being able to receive said uplink optical signal amplitude-modulated in duobinary modulation format.

6. Line termination device (50ᵢ) which can be used in a passive optical network comprising an optical exchange (10) which can be linked by at least one bidirectional optical fibre (40ᵢ) to said line termination device of said network, said line termination device (50ᵢ) comprising:
coupling means (52ᵢ) able to divide the optical power of a downlink optical signal (SO_{Di}) phase-modulated in NRZ-DPSK format, transmitted over the bidirectional optical fibre (40ᵢ) so as to obtain a first and a second downlink optical signal (SO_{D,i1}, SO_{Di2});
first optical reception means (55ᵢ); and
second means (53ᵢ) of generating and transmitting an uplink optical signal (SO_{Ri}) from said second downlink optical signal (SO_{Di2}),
said line termination device being **characterized in that** it furthermore comprises:
a circulator able to make the downlink (SO_{Di}) and uplink (SO_{Ri}) optical signals circulate in said bidirectional optical fibre (40ᵢ);
means (54ᵢ) of converting said first downlink optical signal (SO_{D,i1}) phase-modulated in NRZ-DPSK format into an optical data signal (SO_{D,i1,duo}) amplitude-modulated in duobinary modulation format;
said first optical reception means (55ᵢ) being able to receive said optical data signal (SO_{D,i1,duo}) amplitude-modulated in duobinary modulation format and said second means (53ᵢ) of generating and transmitting being able to generate and transmit the uplink optical signal (SO_{Ri}) phase-modulated in NRZ-DPSK format from said second downlink optical signal (SO_{Di2}).

7. Method of transmitting a downlink optical signal and of receiving an uplink optical signal in a passive optical network comprising an optical exchange (10) linked by at least one bidirectional optical fibre (20, 40₁, 40_{N}) to at least one line termination device (50₁, 50_{N}) of said network, said method comprising:
a step of transmitting a downlink optical data signal (SO_{D}) phase-modulated in NRZ-DPSK format;
a step of receiving an uplink optical signal (SOᵣ),
said method being **characterized in that** it furthermore comprises, prior to the step for reception of an uplink optical signal, a step of converting said uplink optical signal (SOᵣ) phase-modulated in NRZ-DPSK format into an uplink optical signal (SO_{R}, _{duo}) amplitude-modulated in duobinary modulation format.

8. Method of receiving a downlink optical signal and transmitting an uplink optical signal in a passive optical network comprising an optical exchange (10) linked by at least one bidirectional optical fibre (20, 40₁, 40_{N}) to at least one line termination device (50₁, 50_{N}) of said network, said method comprising:
- a coupling step, intended to divide the optical power of a downlink optical signal (SO_{Di}) transmitted on the bidirectional optical fibre (40ᵢ) so as to obtain a first and a second downlink optical signal (SO_{D,i1}, SO_{Di2}); and
- a step of generating and transmitting an uplink optical signal (SO_{Ri}) from said second received downlink optical signal (SO_{Di2});
said method being **characterized in that** it also comprises:
a step of converting said first downlink optical signal (SO_{D,i1}) phase-modulated in NRZ-DPSK format into an optical data signal (SO_{D,i1,duo}) amplitude-modulated in duobinary modulation format; and
a step of receiving said optical data signal (SO_{D,i1,duo}) amplitude-modulated in duobinary modulation format,
the step of generating and transmitting an uplink optical signal comprising the generation and transmission of the uplink optical signal (SO_{Ri}) phase-modulated in NRZ-DPSK format from said second downlink optical signal (SO_{Di2}).
